# NEUE EUROPÄISCHE PATENTSCHRIFT

(11) **EP 0 842 414 B2**
(45) Veröffentlichungstag und Bekanntmachung des Hinweises auf die Entscheidung über den Einspruch: **03.12.2003**
(45) Hinweis auf die Patenterteilung: 13.01.1999
(21) Anmeldenummer: 97902349.6
(22) Anmeldetag: 07.02.1997
(51) Int. Cl.: G01N 21/57, G01J 3/46

(54) **VERFAHREN UND VORRICHTUNG ZUR CHARAKTERISIERUNG LACKIERTER OBERFLÄCHEN**
METHOD AND DEVICE FOR ASSESSING PAINTED SURFACES
PROCEDE ET DISPOSITIF POUR LA CARACTERISATION DE SURFACES ENDUITES DE PEINTURE

(30) Priorität: 15.02.1996 DE 19605520; 21.03.1996 DE 19611062
(43) Veröffentlichungstag der Anmeldung: 20.05.1998
(73) Patentinhaber: E.I. DU PONT DE NEMOURS AND COMPANY, Wilmington Delaware 19898 (US)
(72) Erfinder: RUPIEPER, Paul, D-42111 Wuppertal (DE); HÖFFER, Michael, D-42349 Wuppertal (DE); CRAMM, Joachim, D-42327 Wuppertal (DE); BLUM, Joachim, D-42897 Remscheid (DE)
(74) Vertreter: Gille Hrabal Struck Neidlein Prop Roos
(86) Internationale Anmeldenummer: EP9700555
(87) Internationale Veröffentlichungsnummer: WO97030342

(56) Entgegenhaltungen:
- EP-A- 0 336 029
- EP-A- 0 350 891
- DE-A- 4 227 817
- US-A- 3 916 168
- EUROPEAN COATINGS JOURNAL, Nr. 1-2, 1995, Seiten 32-35, XP000670634 M.OSTERHOLD ET AL.: "Characterization of surface structures by mechanical and optical Fourier spectra" in der Anmeldung erwähnt
- A.Scheibe, P.Svejda: "Flexibles Prüfsystem für die Oberflächentechnik", Taschenbuch für Lackierbetriebe, Ausgabe 1995, S.287-299, Vincent Verlag Hannover (1994)
- W.Garmsen: "Ueber die Prüfung von Lackfarben an keilförmigen SChichten", Farbe und Lack 60. S.257-261 (1954)
- Entwurf DIN 55601 "Prüfung von Pigmenten", farbe + lack, 94. Jahrgang, S.997-998 (1988)

## Beschreibung

Die Erfindung betrifft ein Verfahren und eine Vorrichtung zur Charakterisierung lackierter bzw. mehrschichtig lackierter Oberflächen hinsichtlich ihrer visuellen Wirkung.

Die visuelle Wirkung einer lackierten bzw. mehrschichtig lackierten Oberfläche ergibt sich durch das Zusammenspiel verschiedener optischer Eindrücke wie z. B. Glanz, Struktur und Farbton, der sich wiederum aus dem Farbort, der Helligkeit und der Farbstärke zusammensetzt. Im Falle von Mehrschichtlackierungen rührt der visuelle Eindruck im allgemeinen nicht nur von der äußeren Lackschicht her, sondern er kann auch aus einer oder mehreren darunter befindlichen Lackschichten beeinflußt werden. Eine Fülle von Methoden zur Charakterisierung einer lackierten Oberfläche, die geeignet sind deren visuelle Wirkung für das Auge des Betrachters zu beschreiben, ist bekannt. Beispiele sind die dem Fachmann bekannten nach optischen Prinzipien arbeitenden Verfahren zur Glanzmessung, zur Messung des Glanzschleiers (Haze), zur Messung des Farbtons (Farbmetrik) und zur Bestimmung von Oberflächenstrukturen. Eine wesentliche Einflußgröße hinsichtlich der visuellen Wirkung einer lackierten Oberfläche ist die Schichtdicke, in der die betreffende Lackschicht oder die betreffenden Lackschichten appliziert worden sind. Soll eine mit einer Einschichtlackierung oder mit einer Mehrschichtlackierung versehene Oberfläche hinsichtlich der visuellen Wirkung in Abhängigkeit von der Schichtdicke einer betreffenden Lackschicht oder von der Schichtdicke speziell interessierender Lackschichten charakterisiert werden, ist es notwendig, eine Vielzahl von Probeblechen zu lackieren und zu vermessen. Diese Vielzahl ergibt sich zum einen aus der Notwendigkeit mehrere Probebleche in unterschiedlicher Schichtdicke lackieren zu müssen und zum anderen deshalb, um einen statistischen Mittelwert, der erst eine Reproduzierbarkeit der erhaltenen Meßwerte gewährleistet, zu erhalten. Die Aussagekraft so erhaltener Meßwerte ist dennoch kritisch zu sehen, da die Korrelation mit dem visuellen Eindruck nur bedingt gegeben ist. Das menschliche Auge besitzt eine den visuellen Eindruck einer lackierten Fläche als Integral wahrnehmende Funktion.

Es besteht die Aufgabe, ein rationelles Verfahren zur Charakterisierung lackierter Oberflächen hinsichtlich ihrer visuellen Wirkung in Abhängigkeit von der Schichtdicke von einer oder mehreren Lackschichten bereitzustellen. Das zu findende Verfahren soll reproduzierbare, gut mit der integrierenden Funktion des menschlichen Auges korrelierende Meßergebnisse liefern und soll die Schichtdickenabhängigkeit möglichst eindrucksvoll deutlich machen. Das Verfahren soll unter möglichst geringem Verbrauch an Lack und Probeblechen durchführbar sein und eingesetzt werden können im Bereich der Lackentwicklung, der Qualitätskontrolle in der Lackfertigung, bei der Entwicklung sowie auch der Überwachung von Lackierprozessen, was sowohl den Applikations- als auch den Trocknungsprozeß umfaßt.

Es hat sich gezeigt, daß diese Aufgabe durch das einen Gegenstand der Erfindung bildende Verfahren zur Bestimmung der visuellen Wirkung von Lackierungen gelöst wird, das dadurch gekennzeichnet ist, daß eine, zwei oder mehrere Lackschichten auf die Oberfläche eines ebenen Substrats appliziert und getrocknet oder gehärtet werden, wobei eine oder zwei der Lackschichten mit einem Schichtdickegradienten in Form eines Keils appliziert werden, und auf der. so erhaltenen lackierten Oberfläche anschließend an über die Oberfläche verteilten verschiedenen Meßpunkten jeweils eine oder mehrere den visuellen Eindruck beeinflussende Oberflächeneigenschaften mittels eines oder mehrerer optischer Meßverfahren, sowie die jeweilige Dicke der gradientenförmig applizierten Lackschicht oder die jeweilige Dicke jeder einzelnen der beiden gradientenförmig applizierten Lackschichten vermessen werden.

Weisen bei dem erfindungsgemäßen Verfahren zwei Lackschichten einen Schichtdickegradienten auf, so werden die zwei Lackschichten bevorzugt mit einem im rechten Winkel zueinander angeordneten Schichtdickegradienten appliziert.

Bevorzugt werden die Messungen anhand von Meßpunkten durchgeführt, die in Form eines gitterförmigen Rasters vollflächig über die Lackierung verteilt sind.

Es ist auch möglich die Messungen an nur einer in teressierenden Teilfläche der lackierten Oberfläche durchzuführen, wobei auch bei dieser Ausführungsform die Meßpunkte bevorzugt in Form eines gitterförmigen Rasters angeordnet sind.

Als Substrat mit einer ebenen Oberfläche werden bevorzugt Prüfbleche verwendet. Dieser Ausdruck wird im folgenden verwendet, ohne jedoch eine Einschränkung darzustellen.

Das erfindungsgemäße Verfahren erlaubt es insbesondere, die erhaltenen optischen Meßpunkte in ein oder mehrere Korrelationsdiagramme zur jeweils zugehörigen Dicke der einen keilförmigen Schicht oder der beiden keilförmigen Schichten einzutragen, im Falle von zwei gradientenförmig applizierten Lackschichten beispielsweise in ein Korrelationsdiagramm in dreidimensionaler Darstellung (eine räumliche Darstellung aller optischen Meßpunkte als Funktion der beiden Schichtdicken) oder bevorzugt in Form einer Schar von Korrelationsdiagrammen (mehrere Darstellungen mit der entsprechenden Teilmenge der optischen Meßpunkte als Funktion der Schichtdicke der einen Lackschicht bei einer jeweils konstanten Schichtdicke der zweiten Lackschicht oder umgekehrt).

Das erfindungsgemäße Verfahren unterliegt keinerlei Beschränkung hinsichtlich der Art der Lacke bzw. Lackschichten. So können die zu charakterisierenden Oberflächen Ein- oder Mehrschichtlackierungen sein, zu deren Herstellung pigmenthaltige und/oder pigmentfreie Überzugsmittel eingesetzt werden. Beispiele sind farbendarstellung kenntlich gemacht werden.

Dementsprechend kann das erfindungsgemäße Verfahren auch mit Erfolg bei der Überwachung von Lackierprozessen eingesetzt werden, was sowohl die Überwachung der Lackapplikation als auch der Lacktrocknung einschließt. Ist beispielsweise sichergestellt, daß das eingesetzte Lackmaterial den Spezifikationen entspricht (was wie vorstehend erwähnt ebenfalls mittels des erfindungsgemäßen Verfahrens kontrolliert werden kann), so können Abweichungen vom vorgeschriebenen Lackierprozeß (wie beispielsweise die Nichteinhaltung vorgeschriebener Applikations- und/oder Trocknungsparameter) durch Anwendung des erfindüngsgemäßen Verfahrens schnell erkannt und korrigiert werden. Auch hier gilt, daß die Korrelationsdiagramme oftmals nicht nur die Abweichung an sich erkennen lassen, sondern auch deren Ursache.

Ein besonderer Wert des erfindungsgemäßen Verfahrens ergibt sich aus der Möglichkeit, das Zusammenwirken von Lackierprozeß und Lackformulierung zu studieren. Beispielsweise kann der Wunsch bestehen, in unterschiedlichen Lackieranlagen mit unterschiedlichen fest vorgegebenen Applikations- und/oder Trocknungsparametem Substrate mit dem gleichen visuellen Eindruck herzustellen. Durch Erstellen des oder der geeigneten Korrelationsdiagramme nach dem erfindungsgemäßen Verfahren kann so beispielsweise ein geeignetes Additivkonzept für den Lack gefunden werden, das es gestattet im Prinzip jeweils den gleichen Lack einzusetzen, diesen jedoch jeweils mit den geeigneten Additiven auf die speziellen Bedingungen unterschiedlicher Lackieranlagen anzupassen. So wird es möglich, daß in verschiedenen Lackieranlagen lackierte Teile den gleichen visuellen Eindruck aufweisen, was sich im jeweiligen Korrelationsdiagramm in einem identischen Muster widerspiegelt.

Nachstehend werden Beispiele für Oberfiächenerscheinungen angegeben, die mit Hilfe der erfindungsgemäßen Verfahrensweise erfaßt und charakterisiert werden können.

Das erfindungsgemäße Verfahren kann vorteilhaft eingesetzt werden zur Erfassung und Charakterisierung der Mikrostruktur, des Benetzungsverhaltens, des Verlaufs, der Ablaufneigung, des Anlöseverhaltens und des Orangenhauteffekts unter Einsatz von Verfahren zur Bestimmung des langwelligen und/oder kurzwelligen Anteils der Oberflächenstruktur lackierter Oberflächen, insbesondere durch Einsatz des vorstehend erwähnten Meßgeräts Wave-scan^{R}.

Weiterhin kann das erfindungsgemäße Verfahren unter Einsatz farbmetrischer Methoden, insbesondere durch Bestimmung der Helligkeit vorteilhaft genutzt werden zur Erfassung und Charakterisierung der Deckfähigkeit, des Farbtons, des Helligkeitsflops, des Farbflops, der Wolkigkeit, der Spritznebelaufnahme, von Anlöseeffekten und insbesondere bei unter Verwendung von Effektbasislacken hergestellten Basislack/Klarlack-Zweischichtlackierungen zur Erfassung und Charakterisierung von Ablauferscheinungen des Effektbasislacks.

Das erfindungsgemäße Verfahren wird bevorzugt automatisiert durchgeführt. Beispielsweise können das Meßgerät oder mehrere verschiedene Meßgeräte zugleich, beispielsweise ein Meßgerät für die Glanzmessung, ein Meßgerät zur Bestimmung der Oberflächenstruktur und ein Meßgerät zur Bestimmung der Helligkeit zugleich, von einer automatisch arbeitenden Bewegungseinrichtung entsprechend dem gewünschten Meßgitter über das lackierte Probeblech geführt werden. Dies kann beispielsweise unter Verwendung eines an sich üblichen X,Y-Meßtisches realisiert werden. Die aus Meßwerten und diesen zugeordneten Dicken der keilförmig lackierten Schicht oder keilförmig lackierten Schichten gebildeten Wertpaare oder Wertetripel können beispielsweise in einem angeschlossenen Rechner, z.B. Personalcomputer, gespeichert und anschließend als ein bzw. mehrere Korrelationsdiagramme ausgedruckt werden. Beispielsweise kann dieser Ausdruck als ein Korrelationsdiagramm in zweidimensionaler oder im Faller zweier gradientenförmiger Lackschichten in dreidimensionaler Darstellung (eine räumliche Darstellung aller optischen Meßpunkte als Funktion der beiden Schichtdicken) oder bevorzugt in Form einer Schar von Korrelationsdiagrammen (mehrere Darstellungen mit der entsprechenden Teilmenge der optischen Meßpunkte als Funktion der Schichtdicke der einen Lackschicht bei einer jeweils konstanten Schichtdicke der zweiten Lackschicht oder umgekehrt) erfolgen. Beispielsweise kann eine räumliche Darstellung aller optischen Meßpunkte als Funktion der Basislack- und der Klarlackschichtdicke einer Basislack/Klarlack-Zweischichtlackierung erfolgen, oder man erhält eine Schar von Korrelationsdiagrammen, die jeweils den betreffenden Teil der optischen Meßpunkte als Funktion der Basislackschichtdicke bei einer jeweils konstanten Klarlackschichtdicke abbilden oder umgekehrt, d.h. der betreffende Teil der optischen Meßpunkte wird jeweils als Funktion der Klarlackschichtdicke bei einer jeweils konstanten Basislackschichtdicke dargestellt. Vorteilhaft, z. B. zwecks Durchführung eines bedienerunabhängigen Nachtmeßbetriebes, kann der X,Y-Meßtisch gekoppelt sein mit einem automatischen Probenwechsler, in dem mehrere Probebleche gestapelt und diese nacheinander der Messung auf dem X,Y-Meßtisch zugeführt werden.

Die Erfindung betrifft somit auch eine Vorrichtung zur Bestimmung der visuellen Wirkung von auf Probeplatten aufgebrachten Lackierungen mit einem Meßtisch zum auswechselbaren Auflegen der Probeplatten, die dadurch gekennzeichnet ist, daß oberhalb des Meßtisches ein Halter sowohl in Längsrichtung (Y-Achse) als auch auch in Querrichtung (X-Achse) des Meßtisches verfahrbar gelagert ist, wobei der Halter ein oder mehrere Meßgeräte zur optischen Bewertung sowie ein Meßgerät zur schichtdicken-messung der Lackierungen trägt. Bevorzugt ist bei dieser Vorrichtung der Halter schrittweise verfahrbar gelagert. Klarlacke, farb- und/oder effektgebende Basislacke, Decklacke und Füllerlacke. Zur Erzeugung der Lackschichten können lösemittelfreie, lösemittelhaltige oder wäßrige Flüssiglacke oder Pulverlacke eingesetzt werden. Die Überzugsmittel können Ein- oder Mehrkomponentenlacke sein, dabei kann es sich um physikalisch trocknende oder chemisch vernetzende (härtende) Systeme handeln. Bei den chemisch vernetzenden Systemen kann die Vernetzung thermisch oder durch energiereiche Strahlung induzierbar sein. Im Zusammenhang mit der vorliegenden Erfindung kann Lacktrocknung physikalische Trocknung oder chemische Vernetzung einer Lackschicht bei Umgebungs- oder erhöhter Temperatur, beispielsweise durch Einbrennen oder Einwirkung von Wärmestrahlung (IR-Strahlung), oder auch durch energiereiche Strahlung, beispielsweise durch UV- oder Elektronenstrahlung, induzierte chemische Vernetzung einer Lackschicht bedeuten.

Handelt es sich um eine Einschichtlackierung, deren Oberfläche charakterisiert werden soll, so wird der betreffende Lack mit einem Schichtdickengradienten, also in Form eines Keils bevorzugt mittels Spritzapplikation aufgetragen und getrocknet. Der Schichtdickengradient kann dabei einen weiten Bereich überstreichen, beispielsweise einen Bereich zwischen über 0 und 100 µm. Die Applikation und/oder die anschließende Trocknung können so durchgeführt werden, daß sich das Probeblech währenddessen in einer waagerechten Position befindet. Bevorzugt jedoch finden Applikation oder Trocknung, besonders bevorzugt Applikation und Trocknung insbesondere der keilförmig applizierten Lackschicht, an einem außerhalb der Waagerechten befindlichen, besonders bevorzugt senkrecht ausgerichteten Probeblech statt. Dabei befindet sich der Bereich höchster Schichtdicke der keilförmig applizierten Lackschicht bevorzugt am unteren, d.h. erdnäheren Ende.

Im Falle von Mehrschichtlackierungen, bei denen eine Lackschicht gradientenförmig appliziert wird, beispielsweise den im Bereich der Kraftfahrzeuglackierung bekannten Basislack/Klarlack-Zweischichtlackierungen, insbesondere Basislack/Klarlack-Zweischichteffektlackierungen gelten im Prinzip die gleichen, schon im vorstehenden Absatz gemachten Ausführungen, wobei eine der die Mehrschichtlackierung bildenden Lackschichten in einem Schichtdickengradienten appliziert wird. Beispielsweise kann die farb- und/oder effektgebende Basislackschicht oder die Klarlackschicht einer Basislack/Klarlack-Zweischichtlackierung mit einem Schichtdickengradienten appliziert werden.

Sollen zwei Lackschichten einen Schichtdickegradienten aufweisen, werden zwei betreffende Lackschichten einer Mehrschichtlackierung mit einem bevorzugt im rechten Winkel zueinander angeordneten Schichtdickengradienten, also jeweils in Form eines Keils bevorzugt mittels Spritzapplikation aufgetragen und getrocknet. Die beiden Schichtdickengradienten können dabei jeweils einen weiten Bereich überstreichen, beispielsweise einen Bereich zwischen 0 und 100 µm. Die Applikation und/oder die anschlieBende Trocknung können so durchgeführt werden, daß sich das Probeblech währenddessen in einer waagerechten Position befindet. Bevorzugt jedoch finden Applikation oder Trocknung, besonders bevorzugt Applikation und Trocknung insbesondere der beiden keilförmig applizierten Lackschichten, an einem außerhalb der Waagerechten befindlichen, besonders bevorzugt jeweils senkrecht ausgerichteten Probeblech statt. Dabei befindet sich der Bereich höchster Schichtdicke der keilförmig applizierten Lackschichten jeweils bevorzugt am unteren, d.h. erdnäheren Ende. Hierzu kann es beispielsweise zweckmäßig, aber nicht notwendig, sein, die erste keilförmig applizierte Lackschicht nach deren Auftrag auf ein in senkrechter Lage befindliches Probeblech abzulüften (im Falle der bevorzugten naß-in-naß Applikation), zu trocknen oder zu härten und dann die zweite keilförmige Schicht nach Drehung um 90° aufzutragen.

Es sei darauf hingewiesen, daß der Begriff "Probeblech" im Rahmen der vorliegenden Erfindung keinerlei Beschränkung in der Materialauswahl darstellt, vielmehr handelt es sich lediglich um ein glattes, ebenes bzw. nicht gebogenes, beispielsweise rechteckiges Substrat aus beliebigen geeigneten Materialien, bevorzugt aus Metall oder Kunststoff. Insbesondere geeignet sind die in der Lackindustrie üblichen rechteckigen Prüfbleche beliebiger Abmessungen, beispielsweise in der Größenordnung von 300 mm mal 600 mm oder 600 mm mal 600 mm. Diese können beispielsweise aus Stahl sein. Bevorzugt erfolgt die Applikation zur Gewährleistung einer Reproduzierbarkeit mittels eines üblichen Automaten, wie er beispielsweise bekannt ist aus der EP-B-0 350 891. Beispielsweise kann der Schichtdickegradient oder können die beiden Schichtdickengradienten bevorzugt so erzeugt werden, daß die eine oder die beiden betreffenden Lackschichten in mehreren beispielsweise zwei oder mehreren Spritzzyklen appliziert werden, wobei die Spritzzonen sich nur teilweise überdecken.

Beim erfindungsgemäßen Verfahren ist es beliebig, welche Schicht bzw. Schichten keilförmig (gradientenförmig) appliziert werden. Zweckmäßig werden die eine Schicht bzw. beiden Schichten keilförmig appliziert, an deren Auswirkung auf den visuellen Gesamteindruck man interessiert ist. Besonders bevorzugt handelt es sich bei zwei gradientenförmig applizierten Lackschichten um direkt benachbarte Schichten, die bevorzugt jeweils in im rechten Winkel zueinander angeordneten Keilen lackiert werden.

Beispielsweise können sowohl die farb- und/oder effektgebende Basislackschicht als auch die Klarlackschicht einer Basislack/Klarlack-Zweischichtlackierung, wie sie im Bereich der Kraftfahrzeugserienlackierung bekannt ist, mit im rechten Winkel zueinander angeordneten Schichtdickengradienten appliziert werden.

Beim erfindungsgemäßen Verfahren werden beim Auftrag der gradientenförmig ausgebildeten interessierenden Schicht oder der beiden gradientenförmig ausgebildeten interessierenden Schichten bevorzugt eine, zwei oder mehrere Zonen auf dem Prüfblech ausgespart. Diese Zonen können beispielsweise streifenförmig, beispielsweise an den Rändern des Prüfblechs ausgebildet sein. Dies kann beispielsweise so erfolgen, daß beim Auftrag der gradientenförmig ausgebildeten Schicht oder jeder einzelnen der beiden gradientenförmig ausgebildeten Schichten die freibleibenden Zonen abgeklebt werden, beispielsweise durch streifenförmige Klebebänder. Die übrigen Schichten, einschließlich der eventuellen weiteren gradientenförmig applizierten Schicht, werden in diesen Zonen in gleicher Weise wie auf dem gesamten Prüfblech appliziert. In der Praxis können hierzu beispielsweise die Aufkleber vor Auftrag der weiteren Schicht oder Schichten entfernt werden. Auf diese Weise wird es ermöglicht, die Schichtdicke der gradientenförmig aufgetragenen Schicht oder der einzelnen gradientenförmig aufgetragenen Schichten an den einzelnen Meßpunkten durch Vergleich mit den ausgesparten Zonen additiv zu ermitteln.

Das erfindungsgemäße Verfahren wird bevorzugt so durchgeführt, daß nach sorgfältiger Kalibrierung des Meßsystems das mit der Lackierung versehene Probeblech hinsichtlich der betreffenden den visuellen Eindruck beeinflussenden Oberflächeneigenschaft n-fach in Form eines sich über die gesamte Oberfläche erstrekkenden aus n Meßpunkten bestehenden Gitters mittels optischer Meßverfahren vermessen wird, wobei für jeden Meßpunkt auch die Trockenschichtdicke der betreffenden keilförmigen Lackschicht bzw. die Trockenschichtdicken der betreffenden keilförmigen Lackschichten gemessen werden. Bevorzugt beträgt die Anzahl der Meßpunkte n = etwa 400 bis etwa 1000 oder bei zwei keilförmigen Lackschichten n = etwa 1500 bis etwa 3000. Die Schichtdicke wird mit den üblichen, dem Fachmann bekannten Methoden ermittelt, wie z.B. magnetische oder magnetisch-induktiv arbeitende Schichtdickenmeßverfahren (wie beispielsweise beschrieben in H. Kittel, Lehrbuch der Lacke und Beschichtungen, Band 8/1, Verlag W.A. Colomb, 1980, Seite 140 ff. und Glasurit-Handbuch Lacke und Farben, Curt R. Vincentz Verlag, München, 1984, Seite 292 ff.), bevorzugt wird die Schichtdicke auf den bevorzugten Probeblechen aus Stahl mit magnetisch-induktiven Meßverfahren bestimmt. Beispielsweise wird beim erfindungsgemäßen Verfahren bevorzugt so vorgegangen, daß mehrere Messungen entlang einer Linie mit gleicher Schichtdikke der betreffenden Lackschicht oder einer der betreffenden Lackschichten vorgenommen werden. Beispielsweise kann beginnend bei niedriger Schichtdicke und sich zu höchster Schichtdicke hin fortsetzend jeweils bevorzugt entlang äquidistanter Linien gemessen werden. Dabei erfaßt jede einzelne Linie gleiche Schichtdicken der betreffenden bzw, einer der betreffenden Lackschichten. Die verschiedenen äquidistant angeordneten Linien sind unterschiedlichen Schichtdikken der betreffenden Lackschicht oder einer der betreffenden Lackschichten zugeordnet. Beispielsweise wird ein Meßgitter aus insgesamt etwa 400 bis etwa 1000 Meßwerten pro Probeblech erfaßt. Bei 500 Meßpunkten können beispielsweise entlang 20 verschiedener Linien gleicher Schichtdicke jeweils 25 Meßwerte aufgenommen werden. Oder es wird im Falle zweier keilförmiger Lackschichten beispielsweise ein Meßgitter aus insgesamt etwa 1500 bis etwa 3000 Meßwerten pro Probeblech erfaßt. Bei 1600 Meßpunkten können beispielsweise entlang 40 verschiedener Linien gleicher Schichtdicke einer der betreffenden Lackschichten jeweils 40 Meßwerte aufgenommen werden. Dabei werden die Abstände und Anzahl der Linien sowie der Meßpunkte so gelegt, daß bevorzugt mindestens etwa ein Meßpunkt pro Quadratzentimeter Lackoberfläche gemessen wird.

Zur Verwertung können die erhaltenen Meßwerte beispielsweise von der Ordinate, die zugehörigen Schichtdicken von der Abzisse eines Korrelationsdiagramms abgetragen werden. Man erhält für die zu charakterisierende Eigenschaft der lackierten Oberfläche ein unverwechselbares Muster aus n Punkten, das vergleichbar einem Fingerabdruck ist. Man erhält somit eine Bewertungsmöglichkeit der visuellen Eigenschaften einer Lackierung. Insbesondere läßt sich bewerten, ob und wie die visuellen Eigenschaften von definierten Applikations- und Trocknungsbedingungen sowie einer definierten Zusammensetzung eines oder mehrerer Lacke, die zur Lackierung verwendet werden, abhängen. Zur Verwertung können im Falle zweier keilförmiger Lackschichten die erhaltenen Meßwerte auch als Korrelationsdiagramm in dreidimensionaler Darstellung (eine räumliche Darstellung aller optischen Meßpunkte als Funktion der beiden Schichtdicken) oder bevorzugt in Form einer Schar von Korrelationsdiagrammen (mehrere Darstellungen mit der entsprechenden Teilmenge der optischen Meßpunkte als Funktion der Schichtdicke der einen Lackschicht bei einer jeweils konstanten Schichtdicke der zweiten Lackschicht oder umgekehrt) dargestellt werden. Beispielsweise können die erhaltenen optischen Meßwerte von der Z-Achse, die zugehörigen Schichtdicken der beiden als Keil lackierten Schichten von der X- bzw. der Y-Achse eines dreidimensionalen Korrelationsdiagramms abgetragen werden oder die optischen Meßwerte werden von der Ordinate und die zugehörigen Schichtdicken einer der keilförmig lackierten Schichten von der Abszisse eines Korrelationsdiagramms abgetragen, wobei dies mehrfach für verschiedene jeweils konstante Schichtdicken der zweiten keilförmig lackierten Schicht erfolgt oder umgekehrt. Man erhält für die zu charakterisierende E igenschaft der mehrschichtig lackierten Oberfläche ein (dreidimensionales) bzw. mehrere (zweidimensionale) unverwechselbare Muster aus insgesamt n Punkten, die jeweils vergleichbar einem Fingerabdruck sind. Man erhält somit eine Bewertungsmöglichkeit der visuellen Eigenschaften einer Mehrschichtlackierung. Insbesondere läßt sich bewerten, ob und wie die visuellen Eigenschaften von definierten Applikations- und Trocknungsbedingungen sowie von der definierten Zusammensetzung der zur Herstellung der Mehrschichtlackierung verwendeten Lacke abhängen.

Die visuell erfaßbaren Eigenschaften einer einoder mehrschichtig lackierten Oberfläche werden beeinflußt durch das komplexe Zusammenspiel einer Fülle von variierbaren Parametern der Lackmaterialien selber, der eigentlichen Lackapplikation und der Lacktrocknung. Dieses Zusammenspiel beeinflußt beispielsweise das für das Auge wahrnehmbare Auftreten und die Ausprägung solcher Phänomene wie Farbton, Helligkeitsund/oder Farbflop (optische Anisotropie), Verlauf, Ablaufneigung, Orangenhautbildung, Mikrostruktur, Spritznebelaufnahmevermögen, Anlöseeffekte, Wolkigkeit bei Effektlackierungen, Deckfähigkeit, Glanz, Glanzschleier, Phänomene, die sich letztlich im visuellen Eindruck einer ein- oder mehrschichtig lackierten Oberfläche niederschlagen. Jede dieser Eigenschaften kann die Grundlage für die beim erfindungsgemäßen Verfahren durchzuführenden Messungen bilden.

Das vorstehend erwähnte Spritznebelaufnahmevermögen zeigt sich insbesondere dann, wenn der einzelne betreffende Gradient in Form von mehreren versetzt aufgetragenen Lackschichten ausgebildet wird. An der Grenzfläche von zwei Lackschichten werden von der unteren Lackschicht Spritznebel aufgenommen, die beim Auftrag der darüberliegenden Lackschicht anfallen. Auf diese Weise läßt sich das Spritznebelaufnahmevermögen von Lackierungen beurteilen; dies ist wichtig, da sich Spritznebel in Lackierkabinen in der Praxis kaum vermeiden lassen.

Beispiele für visuell erfaßbare und meßbare Eigenschaften sind Glanz, Glanzschleier (Haze), Oberflächenstruktur mit lang- und kurzwelligem Anteil, Farbton, beispielsweise Farbort, Farbstärke, Helligkeit.

Beispiele für im Rahmen des erfindungsgemäßen Verfahrens einsetzbare Verfahren zur Messung des Glanzes lackierter Oberflächen sind die üblichen, dem Fachmann bekannten, auf dem Prinzip der Lichtreflexion basierenden goniophotometrischen Verfahren, wie beispielsweise beschrieben in H. Kittel, Lehrbuch der Lacke und Beschichtungen, Band 8/1, Verlag W.A. Colomb, 1980, Seite 240 ff., Glasurit-Handbuch Lacke und Farben, Curt R. Vincentz Verlag, München, 1984, Seite 239 ff. und DIN 67530). Im Rahmen des erfindungsgemäßen Verfahrens bevorzugt eingesetzte Glanzmeßgeräte sind handelsübliche Geräte, wie beispielsweise die von der Firma BYK-Gardner vertriebenen Geräte Microgloss^{R} und Micro-Tri-Gloss^{R}.

Beispiele für im Rahmen des erfindungsgemäßen Verfahrens einsetzbare Verfahren zur Messung des Glanzschleiers (Haze) lackierter Oberflächen sind die üblichen, dem Fachmann bekannten, ebenfalls auf dem Prinzip der Lichtreflexion basierenden goniophotometrischen Verfahren (wie beispielsweise beschrieben in Glasurit-Handbuch Lacke und Farben, Curt R. Vincentz Verlag, München, 1984, Seite 240). Es können die handelsüblichen, dem Fachmann geläufigen Meßgeräte eingesetzt werden. Ein im Rahmen des erfindungsgemäßen Verfahrens bevorzugt eingesetztes Meßgerät zur Bestimmung des Glanzschleiers ist beispielsweise das von der Firma BYK-Gardner vertriebene Gerät Microhaze^{R}.

Beispiele für im Rahmen des erfindungsgemäßen Verfahrens einsetzbare Verfahren zur Farbmetrik lakkierter Oberflächen sind die üblichen, dem Fachmann bekannten Verfahren zur Bestimmung der Reflexionskurven von Licht, woraus sich z.B. die im CIELAB-System gebräuchlichen farbmetrischen Größen L*, a* und b* errechnen lassen (wie beispielsweise beschrieben in H. Kittel, Lehrbuch der Lacke und Beschichtungen, Band 8/1, Verlag W.A. Colomb, 1980, Seite 252 ff., Glasurit-Handbuch Lacke und Farben, Curt R. Vincentz Verlag, München, 1984, Seite 220 ff.). Es können alle üblichen, dem Fachmann geläufigen Meßgeräte verwendet werden. Ein im Rahmen des erfindungsgemäßen Verfahrens beispielsweise bevorzugt eingesetztes farbmetrisches Meßgerät ist das von der Firma X-Rite vertriebene Gerät X-Rite MA 58, ein beispielsweise bevorzugt eingesetztes Meßgerät zur Bestimmung der Helligkeit ist das von der Firma BYK-Gardner vertriebene Gerät Micrometallic^{R}.

Ein Beispiel für eine im Rahmen des erfindungsgemäßen Verfahrens einsetzbare Methode zur Bestimmung des langwelligen und des kurzwelligen Anteils der Oberflächenstruktur lackierter Oberflächen ist das dem Fachmann bekannte auf dem Prinzip der durch Oberflächenstrukturen modulierten Lichtreflexion basierende goniophotometrische Verfahren. Es können alle üblichen, dem Fachmann geläufigen Meßgeräte verwendet werden. Beispielsweise wird beim erfindungsgemäßen Verfahren bevorzugt das von der Firma BYK-Gardner vertriebene Meßgerät Wave-scan^{R} (vgl. European Coatings Journal Nr. 1-2 (1995), Seite 32 - 35) eingesetzt.

Beim erfindungsgemäßen Verfahren ist es bevorzugt, die in Abhängigkeit vom Beleuchtungs- und/oder Betrachtungswinkel zu unterschiedlichen Meßergebnissen führenden Messungen, an solchen Probeblechen durchzuführen, die sich bei Lackapplikation und/oder -trocknung, bevorzugt bei Applikation und Trocknung insbesondere der keilförmig applizierten Lackschicht oder der beiden keilförmig applizierten Lackschichten, außerhalb der waagerechten Position, bevorzugt in einer senkrechten Position, befanden. Es ist besonders bevorzugt, wenn sich der Bereich höchster Schichtdicke der als Keil applizierten Lackschicht oder der beiden, bevorzugt im rechten Winkel zueinander angeordneten, jeweils als Keil applizierten Lackschichten während der Lackapplikation und gegebenenfalls auch während der Lacktrocknung dabei jeweils am unteren, d.h. jeweils erdnäheren Ende des Probeblechs befand. Diese Verfahrensweise führt zu besonders aussagekräftigen und differenzierenden Korrelationsdiagrammen. Viele der optischen Messungen werden mit MeBgeräten durchgeführt, die einen Beleuchtungsstrahl aussenden und die Messung beispielsweise am reflektierten Strahl ausführen; diese Geräte haben daher eine Beleuchtungsrichtung, von der her beleuchtet wird, und eine dazu entgegengesetzte Betrachtungsrichtung (Meßrichtung). Bei der vorstehend genannten bevorzugten Ausführungsform ist es besonders bevorzugt, wenn die Beleuchtungs- und/oder Betrachtungsrichtung ungeachtet des für die Messung gewählten Beleuchtungs- und/oder Betrachtungswinkels am Probeblech in Richtung oder um 180 Grad entgegengesetzt einer Achse des Probeblechs verläuft. Bevorzugt wird hierzu die Achse gewählt, die bei Lackapplikation und/oder -trocknung der als Keil applizierten Lackschicht oder derjenigen als Keil applizierten Lackschicht, von der der Haupteinfluß auf die entsprechende optische Messung ausgeht, bevorzugt während Lackapplikation und gegebenenfalls -trocknung dieser Schicht, auf einem außerhalb der Waagerechten, bevorzugt in der Senkrechten befindlichen Probeblech, von oben nach unten verlief. Für den Fachmann ist die Auswahl der Lackschicht, von der der Haupteinfluß auf die entsprechende Messung ausgeht, klar oder sie kann von ihm leicht anhand von Experimenten getroffen werden. Es hängt von der Art des zu untersuchenden Lackes ab, ob es dabei bevorzugt ist, in Richtung der Achse oder gegen die Achse zu beleuchten.

Das erfindungsgemäße Verfahren ist auch im Bereich der Lack- und Bindemittelentwicklung verwendbar. Beispielsweise kann der Einfluß der Lackzusammensetzung auf die visuelle Wirkung einer unter Verwendung des oder der Lacke bei Einhaltung definierter Applikations- und Trocknungsbedingungen erhaltenen Ein- oder Mehrschichtlackierung ermittelt werden. Beispielsweise kann die visuelle Wirkung einer lackierten Oberfläche von Art und Mengenanteil der Bindemittel in den Lacken, von der Art und Menge der flüchtigen Stoffe wie z.B. Lösemittel, von Art und Menge der Additive sowie von Art und Menge der Pigmente und Füllstoffe abhängen. Das erfindungsgemäße Verfahren kann mit Erfolg auch schon in der Stylingphase eingesetzt werden, z.B. bei der Formulierung neuer, bisher unbekannter (Effekt)farbtöne. Auch die Stabilität von Lacken über einen längeren Zeitraum gegebenenfalls unter speziellen Bedingungen, beispielsweise deren Lager- und Ringleitungsstabilität, oder die Eignung von Lacken für einen fest vorgegebenen Lackierungsprozeß kann mit dem erfindungsgemäßen Verfahren erfolgreich überprüft werden. Wenn sich beispielsweise im Falle lager- oder ringleitungsstabiler Lacke auch über einen längeren Zeitraum keine Veränderung im Effekt, im Farbton oder in der Oberflächenstruktur von mit ihnen lackierten Oberflächen ergibt, so zeigt sich das als unverändertes Muster in den entsprechenden nach dem erfindungsgemäßen Verfahren erzeugten Korrelationsdiagrammen.

Das erfindungsgemäße Verfahren kann auch in der Qualitätskontrolle bei der Lackfertigung eingesetzt werden, beispielsweise zur Farbtonfreigabe. Dabei werden unter definierten Bedingungen Probebleche mit dem zu prüfenden Lack oder den zu prüfenden Lacken hergestellt und die entsprechenden Korrelationsdiagramme werden mit den Soll-Diagrammen auf Übereinstimmung als Freigabekriterium verglichen. Abweichungen des Lackmaterials können schnell und sicher erkannt und durch geeignete Einflußnahme auf den Fertigungsprozeß korrigiert werden. Dabei erkennt man mittels der Korrelationsdiagramme oftmals nicht nur die Abweichung an sich, sondern auch deren Ursache.

Weiterhin ist das erfindungsgemäße Verfahren anwendbar bei der Entwicklung von Lackierprozessen, was sowohl den Prozeß der Lackapplikation als auch den Lacktrocknungsprozeß einschließt. Beispielsweise kann unter Verwendung jeweils ein und desselben bzw. im Falle von Mehrschichtlackierungen derselben Lacke und bei Konstanthaltung aller Trocknungsparameter der Einfluß von Applikationsparametem auf die visuelle Wirkung der lackierten Oberfläche untersucht werden. Es können auch die Applikationsparameter konstant gehalten werden und die Trocknungsparameter variiert werden. Beispiele für variierbare Applikationsparameter sind Luftfeuchtigkeit, Temperatur, Art und Betriebsweise des Sprühorgans, Höhe der Spannung bei elektrostatischer Applikation, Art und Schichtdicke der anderen, nicht als Keil lackierten Lackschichten einer Mehrschichtlackierung. Beispiele für variierbare Trocknungsparameter sind Ablüftbedingungen wie Ablüfttemperatur und -dauer, Temperatur/Zeit-Aufheizkurve des Trokkenofens, Trocknungstemperatur bzw. Objekttemperatur als solche, Einbrenndauer, Luftfeuchtigkeit. Beim erfindungsgemäßen Verfahren wird beispielsweise so vorgegangen, daß nur ein Applikations- bzw. Trocknungsparameter variiert wird, während die anderen Applikations- bzw. Trocknungsparameter konstant gehalten werden. Das bzw. die nach dem erfindungsgemäßen Verfahren erhaltenen Korrelationsdiagramme repräsentieren jeweils den Einfluß der Applikations- und/oder Trocknungsparameter auf die visuelle Wirkung einer lackierten Oberfläche.

Beispielsweise kann das optimale Verarbeitungsfenster definierter Lacke hinsichtlich Luftfeuchtigkeit und -temperatur bei deren Applikation bestimmt werden, in dem der visuelle Eindruck und damit die nach dem erfindungsgemäßen Verfahren erhaltenen Korrelationsdiagramme konstant sind, d.h. es besteht die Möglichkeit einen sicheren Verarbeitungsbereich für gegebene Lacke zu definieren.

Weiterhin können im Fall zweier als Keil applizierter Lackschichten beispielsweise ein oder mehrere Bereiche für solche Schichtdickenkombinationen der beiden als Keil lackierten Schichten ermittelt werden, in denen der visuelle E indruck der mehrschichtig lackierten Oberfläche bestimmten Vorgaben entspricht. In einem Diagramm, das die Schichtdicke der einen als Keil lackierten Schicht gegen die Schichtdicke der zweiten als Keil lackierten Schicht einer Mehrschichtlackierung aufträgt, können derartige Bereiche beispielsweise als Falsch-Der Halter kann beispielsweise an einer auf dem Meßtisch verfahrbar gelagerten Brücke angeordnet sein.

Die Brücke kann auf in Längsrichtung (Y-Achse) des Meßtisches verlaufenden Schienen abgestützt sein. Der Halter kann einen in Querrichtung (X-Achse) des Meßtisches an dem Joch der Brücke verfahrbar hängenden Wagen aufweisen. Bevorzugt weist der Wagen senkrecht zum Meßtisch verstellbare Nalteeinrichtungen für die Meßgeräte auf. Zur Durchführung des erfindungsgemäßen Verfahrens können die Brücke und der Wagen mit einer Steuereinrichtung zum Anhalten der Brücke und/oder des Wagens an vorgegebenen oder beliebigen Stellen versehen sein.

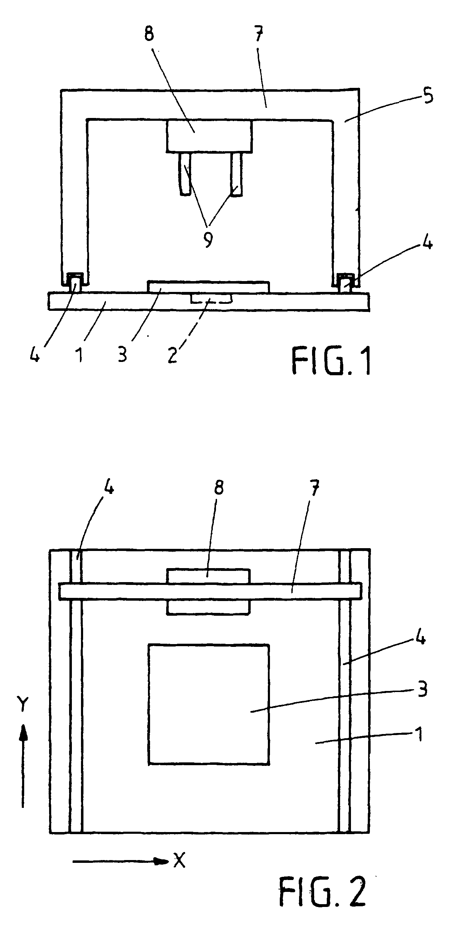

Die beigefügte **Figur 1** stellt eine Seitenansicht eines Ausführungsbeispiels der erfindungsgemäßen Vorrichtung dar.

**Figur 2** stellt eine Draufsicht eines Ausführungsbeispiels der erfindungsgemäßen Vorrichtung dar.

In den Figuren stellt 1 einen Meßtisch dar, der bevorzugt rechteckig oder quadratisch ausgebildet ist. Dieser Meßtisch weist eine Halterung 2 für eine oder mehrere zu bewertende eben aufgelegte lackierte Platten 3 auf. Auf dem Meßtisch ist eine beispielsweise über Schienen 4 in Längsrichtung (Y-Achse) des Meßtischs verschiebbare Brücke 5 ausgebildet. Diese Brücke weist ein in Querrichtung (X-Achse) des Meßtisches ausgebildetes Joch 7 auf. Dieses Joch 7 kann in Form einer Schiene ausgebildet sein, an der ein verfahrbarer Wagen 8 hängt. Der Wagen weist eine oder mehrere senkrecht zum Meßtisch verstellbare Halteeinrichtungen 9 für die optischen Meßgeräte sowie Meßgeräte zur Schichtdickenmessung auf. Sowohl die Brücke 5, als auch der Wagen 8 weisen eine Steuereinrichtung zum Anhalten an vorgegebenen oder beliebigen Stellen auf.

Bei der erfindungsgemäßen Vorrichtung können die Steuereinrichtungen, die die Meßgeräte sowohl in Längsrichtung (Y-Achse) als auch in Querrichtung (X-Achse) des Meßtisches bewegen und anhalten, direkt mit einem Rechner gekoppelt werden, in den auch die jeweiligen Meßwerte der optischen Messungen sowie der Schichtdickenmessungen eingespeist werden. Dieser Rechner kann das gewünschte Korrelationsdiagramm zwischen Schichtdickenmessung und optischen Messungen erstellen, das zu dem gewünschten "Fingerabdruck" führt, der charakteristisch für die Bewertung der visuellen Wirkung von Lackierungen ist.

An die Halter 9 der erfindungsgemäßen Vorrichtung sind ein oder mehrere optische Meßgeräte sowie ein Gerät zur Schichtdickenmessung (beispielsweise induktiv) befestigt. Die erfindungsgemäße Vorrichtung wird so betrieben, daß die Halteeinrichtung zu verschiedenen über die Oberfläche verteilten Meßpunkten bewegt wird. Bevorzugt wird die erfindungsgemäße Vorrichtung so betrieben, daß die Halteeinrichtung in Form eines gitterförmigen Rasters über das Prüfblech bewegt wird. An jedem zu messenden Rasterpunkt wird die Vorrichtung angehalten und das Meßgerät wird mittels der Halteeinrichtung zum Prüfblech abgesenkt. Durch die Möglichkeit vorgegebene Meßpunkte anzusteuern, können für einen Meßpunkt jeweils sowohl die interessierenden optischen Werte als auch die Schichtdicken bestimmt werden. Dies wird in sufeinanderfolgenden Schritten durchgeführt. Dabei können die Meßgeräte so befestigt werden, daß jeweils an verschiedenen Punkten eine oder mehrere optische Messungen und an verschiedenen weiteren Punkten Schichtdickenmessungen durchgeführt werden.

Das erfindungsgemäße Verfahren kann mit Erfolg eingesetzt werden und stellt ein wertvolles Werkzeug dar bei der Lackentwicklung, der Qualitätsprüfung im Rahmen der Lackfertigung sowie bei der Entwicklung und Überwachung von Lackierprozessen. Die erhaltenen Korrelationsdiagramme gestatten Voraussagen über die visuelle Wirkung einer unter Verwendung definierter Lacke und unter Einhaltung definierter Applikations- und/oder Trocknüngsbedingungen hergestellten lackierten Oberfläche. Die charakteristische Form der nach dem erfindungsgemäßen Verfahren erhaltenen Korrelationsdiagramme erlaubt es einen Trend hinsichtlich der Veränderung der visuellen Wirkung einer lakkierten Oberfläche in Abhängigkeit von der Schichtdicke betreffender Lackschichten abzuleiten.

Das erfindungsgemäße Verfahren liefert eine gute Korrelation mit dem visuellen Eindruck einer lackierten Oberfläche, wie ihn das menschliche Auge wahmimmt. Es läßt sich mit wenig Lackmaterial und mit einem einzigen Probeblech rationell und schnell durchführen.

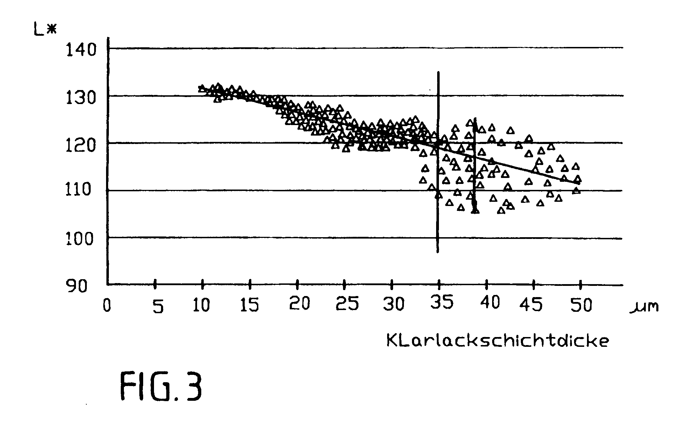

In der beigefügten Figur 3 ist ein Beipiel für ein nach dem efindungsgemäßen Verfahren erhaltenes Helligkeit/Klarlackschichtdicke-Korrelationsdiagramm einer Effektbasislack/Klarlack-Zweischichtlackierung gezeigt. Es soll die Aussagekraft und den Wert des erfindungsgemäßen Verfahrens exemplarisch verdeutlichen. Dieses Diagramm kann als Fingerabdruck verwendet und beispielsweise mit dem Soll-Fingerabdruck einer Musterlackierung verglichen werden.

Das Diagramm wurde erhalten, indem ein senkrecht stehendes mit üblicher kathodischer Tauchlackschicht und Füllerschicht vorbeschichtetes Probeblech mittels eines Spritzlackierautomaten (wie in EP-B-0 350 891 beschrieben) in 15 µm Trockenschichtdicke mit einem silberfarbenen Effektbasislack beschichtet wurde. Nach 5 minütigem Ablüften bei 80°C wurde ein handelsüblicher Zweikomponenten-Klarlack mit einem Schichtdickengradienten von 10 bis 50 µm (höchste Klarlackschichtdicke am erdnäheren Ende des Probeblechs) mittels des gleichen Spritzlackierautomaten aufgetragen und gemeinsam mit der Basislackschicht 30 Minuten bei 130°C eingebrannt. Die Helligkeit der lackierten Oberfläche wurde mit dem Gerät Micrometallic^{R} der Firma BYK-Gardner in Abhängigkeit von der Klarlackschichtdicke mit einem Beleuchtungswinkel von 45 Grad und einem Beobachtungswinkel von 25 Grad zum Glanzreflex gitterartig gemessen. Dabei lagen Beleuchtungs- und Beobachtungsrichtung quer zum Klarlackkeil.

Aus dem Korrelationsdiagramm, dessen Ordinate die Helligkeit (L*, gemäß CIELAB-System) und dessen Abzisse die Klarlackschichtdicke in µm angibt, läßt sich folgendes ablesen: Ab ca. 35 µm Klarlackschichtstärke wird die Basislackschicht angelöst, der Helligkeitswert nimmt ab und streut plötzlich stärker als im Bereich niedriger Klarlackschichtdicke. Dies korreliert gut mit dem visuellen Eindruck, denn bei Betrachtung mit dem Auge wird bei höherer Klarlackschichtdicke das Auftreten von Wolken beobachtet. In der Figur stellt der zur Ordinate parallele Doppelpfeil die maximale Streubreite der Meßpunkte dar.

## Patentansprüche

1. Verfahren zur Bestimmung der visuellen Wirkung von Lackierungen, bei dem eine, zwei oder mehrere Lackschichten auf die Oberfläche eines ebenen Substrats appliziert und getrocknet oder gehärtet werden, wobei eine oder zwei der Lackschichten mit einem Schichtdickegradienten in Form eines Keils appliziert werden, und auf der so erhaltenen lackierten Oberfläche anschließend an über die Oberfläche verteilten verschiedenen Meßpunkten, jeweils eine oder mehrere den visuellen Eindruck beeinflussende Oberflächeneigenschaften mittels eines oder mehrerer optischer Meßverfahren, sowie die jeweilige Dicke der gradientenförmig applizierten Lackschicht oder die jeweilige Dicke jeder einzelnen der beiden gradientenförmig applizierten Lackschichten vermessen werden.

2. Verfahren nach Anspruch 1, **dadurch gekennzeichnet, daß** zwei oder mehrere Lackschichten auf die Oberfläche eines ebenen Substrats appliziert und getrocknet oder gehärtet werden, wobei zwei der Lackschichten mit einem im rechten Winkel zueinander angeordneten Schichtdickegradienten appliziert werden.

3. Verfahren nach Anspruch 1 oder 2, **dadurch gekennzeichnet, daß** an Meßpunkten gemessen wird, die teilflächig oder vollflächig in Form eines gitterförmigen Rasters über die lackierte Oberfläche verteilt sind.

4. Verfahren nach Anspruch 1, 2 oder 3, **dadurch gekennzeichnet, daß** die Applikation der Lackschichten an einer senkrecht ausgerichteten Oberfläche des Substrats erfolgt, wobei jeweils die höchste Schichtdicke des oder der Gradienten am unteren erdnäheren Ende ausgebildet wird.

5. Verfahren nach einem der Ansprüche 1 bis 4, **dadurch gekennzeichnet, daß** die Beleuchtungsrichtung und/oder Betrachtungsrichtung (Meßrichtung) der Meßgeräte der lackierten Oberfläche in Richtung der oder um 180 Grad entgegengesetzt zur Achse der Oberfläche erfolgt, die bei Applikation der gradientenförmig ausgebildeten Lackschicht oder im Fall von zwei gradientenförmig ausgebildeten Lackschichten derjenigen Lackschicht, der das Hauptinteresse gilt, in der senkrechten Stellung der Oberfläche von oben nach unten verlief.

6. Verfahren nach einem der vorhergehenden Ansprüche, **dadurch gekennzeichnet, daß** die Messung automatisiert durchgeführt wird.

7. Verfahren nach einem der vorhergehenden Ansprüche, **dadurch gekennzeichnet, daß** die erhaltenen Meßpunkte in ein oder mehrere Korrelationsdiagramme der Schichtdicke bzw. der Schichtdicken und dem jeweils zugehörigen optischen Meßpunkt eingetragen werden.

8. Verfahren nach Anspruch 7, **dadurch gekennzeichnet, daß** die Erstellung der Korrelationsdiagramme im Anschluß an die jeweilige Messung automatisch über einen Rechner erfolgt.

9. Verfahren nach Anspruch 7 oder 8, **dadurch gekennzeichnet, daß** ein dreidimensionales Korrelationsdiagramm erstellt wird.

10. Verfahren nach Anspruch 7, 8 oder 9, **dadurch.gekennzeichnet, daß** die erstellten Korrelationsdiagramme als Fingerabdruck einer speziellen Lackierung, insbesondere zum Vergleich mit einem Soll-Fingerabdruck, verwendet werden.

11. Verfahren nach einem der vorhergehenden Ansprüche, **dadurch gekennzeichnet, daß** als Oberflächeneigenschaften, die den visuellen Eindruck beeinflussen, Glanz, Glanzschleier (Haze), Oberflächenstruktur, Farbort, Farbstärke und/oder Helligkeit gemessen werden.

12. Verfahren nach einem dervorhergehenden Ansprüche, **dadurch gekennzeichnet, daß** als zu lackierendes Substrat mit ebener Oberfläche ein Probeblech verwendet wird.

13. Verfahren nach Anspruch 12, **dadurch gekennzeichnet, daß** die den jeweiligen optischen Meßpunkten zugeordnete Dicke der gradientenförmigen Lackschicht(en) magnetisch-induktiv gemessen wird.

14. Verfahren nach einem dervorhergehenden Ansprüche, **dadurch gekennzeichnet, daß** es zur Charakterisierung der Mikrostruktur, des Benetzungsverhaltens, des Verlaufs, der Ablaufneigung, des Anlöseverhaltens und/oder des Orangenhauteffekts von Lacken bzw. Lackierungen unter Verwendung eines Meßgeräts zur Bewertung der Oberflächenstruktur durchgeführt wird.

15. Verfahren nach einem der Ansprüche 1 bis 13, **dadurch gekennzeichnet, daß** es zur Charakterisierung des Anlöseverhaltens, der Ablaufneigung, der Deckfähigkeit, des Farbtons, Helligkeitsflops, Farbflops, der Wolkigkeit und/oder der Spritznebelaufnahme von Lacken bzw. Lackierungen unter Verwendung eines farbmetrischen Meßgeräts durchgeführt wird.

16. Verfahren nach Anspruch 15, **dadurch gekennzeichnet, daß** es zur Charakterisierung des Ablaufverhaltens von Effektbasislacken durchgeführt wird.

17. Verfahren nach einem dervorhergehenden Ansprüche, **dadurch gekennzeichnet, daß** es im Bereich der Bindemittel- und Lackentwicklung, zur Prüfung der Lager- und/oder Ringleitungsstabilität, zur Qualitätskontrolle und/oder zur Entwicklung oder Überwachung der Lackapplikation und/oder von Trocknungs- bzw. Lackhärtungsprozessen durchgeführt wird.

18. Verfahren nach einem der vorhergehenden Ansprüche, daß mehrere Schichten aus verschiedenen Lacken appliziert werden.

19. Vorrichtung zur Durchführung des Verfahrens nach einem der vorhergehenden Ansprüche, mit der die visuelle Wirkung von auf Probeplatten (3) aufgebrachten Lackierungen bestimmt wird, mit einem Meßtisch (1) zum auswechselbaren Auflegen der Probeplatten (3), wobei oberhalb des Meßtisches (1) ein Halter (8,9) sowohl in Längsrichtung (Y-Achse) als auch in Querrichtung (X-Achse) des Meßtisches (1) verfahrbar gelagert ist, wobei der Halter (8, 9) eine oder mehrere Meßgeräte zur optischen Bewertung sowie ein Meßgerät zur Schichtdicken messung der Lackierungen trägt.

20. Vorrichtung nach Anspruch 19, **dadurch gekennzeichnet, daß** der Halter (8,9) schrittweise verfahrbar gelagert ist.

21. Vorrichtung nach Anspruch 18 oder 19, **dadurch gekennzeichnet, daß** der Halter (8,9) an einer auf dem Meßtisch (1 ) verfahrbar gelagerten Brücke (5) angeordnet ist.

22. Vorrichtung nach Anspruch 21, **dadurch gekennzeichnet, daß** die Brücke (5) auf in Längsrichtung (Y-Achse) des Meßtisches (1) verlaufenden Schienen abgestützt ist und daß der Halter (8,9) einen in Querrichtung (X-Achse) des Meßtisches (1 ) an dem Joch (7) der Brücke (5) verfahrbar hängenden Wagen (8) aufweist.

23. Vorrichtung nach Anspruch 22, **dadurch gekennzeichnet, daß** am Wagen (8) senkrecht zum Meßtisch (1 ) verstellbare Halteeinrichtungen (9) für die Meßgeräte angeordnet sind.

24. Vorrichtung nach einem der Ansprüche 22 und 23, **dadurch gekennzeichnet, daß** die Brücke (5) und der Wagen (8) mit einer Steuereinrichtung zum Anhalten von Brücke (5) und/oder Wagen (8) an vorgegebenen oder beliebigen Stellen versehen sind.

## Claims

1. A procedure for determining the visual effect of lacquer coatings, in which one, two or more lacquer coats are applied to the surface of a flat substrate and are dried or hardened, wherein one or two of the lacquer coats are applied with a coat thickness gradient in the shape of a wedge, and one or more surface properties which influence the visual impression are each subsequently measured on the coated surface thus obtained, at different measuring points distributed over the surface, by means of one or more optical measuring methods, and the respective thickness of the lacquer coat which is applied in the form of a gradient or the respective thickness of each one of the two lacquer coats which are applied in the form of a gradient is measured,

2. A procedure according to claim 1, **characterised in that** two or more lacquer coats are applied to the surface of a flat substrate and are dried or hardened, wherein two of the lacquer coats are applied with coat thickness gradients disposed at right angles to each other.

3. A procedure according to claims 1 or 2, **characterised in that** measurements are made at measuring points which are distributed over part of the area or over the entire area of the coated surface in the form of a lattice-like grid.

4. A procedure according to claims 1, 2 or 3, **characterised in that** the lacquer coats are applied to a vertically aligned surface of the substrate, wherein the highest coat thickness of the gradient or gradients is formed at the bottom end nearer the ground.

5. A procedure according to any one of claims 1 to 4, **characterised in that** the direction of illumination and/or the direction of observation (direction of measurement) of the measuring instruments for the coated surface is in the direction of the axis of the surface, or 180 degrees opposite thereto, which axis extended from top to bottom with the surface in a vertical position during the application of the lacquer coat in the form of a gradient, or, in the case of two lacquer coats in the form of gradients, during the application of that lacquer coat which is of major interest.

6. A procedure according to any one of the preceding claims, **characterised in that** the measurement is made automatically.

7. A procedure according to any one of the preceding claims, **characterised in that** the data points obtained are plotted on one or more correlation diagrams of coat thickness or coat thicknesses versus the optical data point associated therewith in each case.

8. A procedure according to claim 7, **characterised in that** the correlation diagrams are produced automatically via a computer following the respective measurement

9. A procedure according to claim 7 or 8, **characterised in that** a three-dimensional correlation diagram is produced.

10. A procedure according to claims 7, 8 or 9, **characterised in that** the correlation diagrams produced are used as a fingerprint of a particular coating, particularly for comparison with a desired fingerprint.

11. A procedure according to any one of the preceding claims, **characterised in that** gloss, surface fogging (haze), surface structure, colour location, colour intensity and/or brightness are measured as the surface properties which influence the visual impression.

12. A procedure according to any one of the preceding claims, **characterised in that** a test panel is used as the substrate with a flat surface which is lacquered.

13. A procedure according to claim 12, **characterised in that** the thickness of the lacquer coat(s) applied in the form of a gradient which is associated with the respective optical data points is measured by a magnetic induction method.

14. A procedure according to any one of the preceding claims, **characterised in that** it is carried out in order to characterise the microstructure, the flow, the run-off tendency, the peel-off behaviour and/or the orange peel effect of lacquers or lacquer coatings, using a measuring instrument for the assessment of surface structure.

15. A procedure according to any one of claims 1 to 13, **characterised in that** it is carried out in order to characterise the peel-off behaviour, the run-off tendency, the hiding power, or the shade of colour, brightness flop, colour flop, dullness and/or spray mist absorption of lacquers or coatings, using a colorimetric measuring instrument.

16. A procedure according to claim 15, **characterised in that** it is carried out in order to characterise the run-off behaviour of effect base lacquers.

17. A procedure according to any one of the preceding claims, **characterised in that** it is carried out in the field of binder vehicle and lacquer development for testing stability on storage and/or stability in closed loop pipelines, for quality control and/or for the development or monitoring of lacquer application and/or of drying or lacquer hardening processes.

18. A procedure according to any one of the preceding claims, **characterised in that** a plurality of coats of different lacquers is applied.

19. An apparatus for carrying out the procedure according to any one of the preceding claims, with which the visual effect is determined of coatings applied to test panels (3), comprising a measuring table (1) for the interchangeable placement of test panels (3), wherein a holder (8,9) is mounted above the measuring table (1) so that it can travel both in the longitudinal direction (Y axis) and in the transverse direction (X axis) of the measuring table (1), wherein the holder (8,9) carries one or more instruments intended for the optical evaluation of as well as one instrument for measuring the coat thickness of the coating.

20. An apparatus according to claim 19, **characterised in that** the holder (8,9) is mounted so that it can be moved in steps.

21. An apparatus according to claim 18 or 19, **characterised in that** the holder (8,9) is disposed on a travelling bridge (5) which is mounted on the measuring table (1).

22. An apparatus according to claim 21, **characterised in that** the bridge (5) is supported on rails running in the longitudinal direction (Y axis) of the measuring table (1) and that the holder (8,9) comprises a carriage (8) which is suspended so that it can travel on the crossbar of the bridge in the transverse direction (X axis) of the measuring table (1).

23. An apparatus according to claim 22, **characterised in that** holding devices (9) for the measuring instruments, which holding devices can be adjusted perpendicularly to the measuring table (1), are disposed on the carriage (8).

24. An apparatus according to either one of claims 22 or 23, **characterised in that** the bridge (5) and the carriage (8) are provided with a controller for stopping the bridge (5) and/or carriage (8) at predetermined or arbitrary points.

## Revendications

1. Procédé pour déterminer l'effet visuel de systèmes de peintures, dans lequel une ou deux couches de peinture, ou plus, sont appliquées sur la surface d'un subjectile plan, et séchées ou durcies, une ou deux des couches de peinture étant appliquées selon un gradient d'épaisseur de feuil en forme de coin, puis, sur la surface peinte ainsi obtenue, on procède sur plusieurs points de mesure répartis sur toute la surface à la mesure d'une ou plusieurs propriétés de surface influant sur l'effet visuel, grâce à un ou plusieurs procédés de mesure optique, ainsi que de l'épaisseur du feuil appliqué selon un gradient, ou encore l'épaisseur de chacun des deux feuils appliqués selon un gradient.

2. Procédé selon la revendication 1, **caractérisé en ce qu'**au moins deux couches de peinture sont appliquées sur la surface d'un subjectile plan, et séchées ou durcies, auquel cas deux des couches de peinture sont appliquées selon des gradients d'épaisseur de feuil faisant un angle droit l'un par rapport à l'autre.

3. Procédé selon la revendication 1 ou 2, **caractérisé en ce que** la mesure est effectuée sur des points de mesure qui sont répartis sur une partie de la surface peinte ou sur la totalité de la surface peinte sous forme d'une trame quadrillée.

4. Procédé selon la revendication 1, 2 ou 3, **caractérisé en ce que** l'application des couches de peinture s'effectue sur une surface dirigée verticalement du subjectile, l'épaisseur de feuil la plus grande du ou des gradients étant dans chaque cas disposée au niveau de l'extrémité inférieure la plus proche du sol.

5. Procédé selon l'une des revendications 1 à 4, **caractérisé en ce que** la direction d'éclairage et/ou la direction d'observation (direction de la mesure) des appareils de mesure de la surface peinte correspondent à la direction de l'axe de la surface, ou à la direction opposée à 180° à l'axe de la surface, direction qui, lors de l'application de la couche de peinture configurée selon un gradient, ou encore, dans le cas de deux couches de peinture configurées selon un gradient, la couche de peinture présentant l'intérêt le plus grand, court de haut en bas quand la surface est en position verticale.

6. Procédé selon l'une des revendications précédentes, **caractérisé en ce que** la mesure est réalisée par un moyen automatisé.

7. Procédé selon l'une des revendications précédentes, **caractérisé en ce que** les points de mesure obtenus sont portés sur un ou plusieurs diagrammes de corrélation de l' épaisseur de feuil ou des épaisseurs de feuil et du point de mesure optique correspondant.

8. Procédé selon la revendication 7, **caractérisé en ce que** l'établissement des diagrammes de corrélation s'effectue automatiquement, à l'aide d'un calculateur, après la mesure correspondante.

9. Procédé selon la revendication 7 ou 8, **caractérisé en ce qu'**on établit un diagramme de corrélation tridimensionnel.

10. Procédé selon la revendication 7, 8 ou 9, **caractérisé en ce que** les diagrammes de corrélation établis sont utilisés sous forme d'une empreinte d'un système de peintures spécial, en particulier pour comparaison avec une empreinte prescrite.

11. Procédé selon l'une des revendications précédentes, **caractérisé en ce qu'**on mesure en tant que propriétés de surface ayant une influence sur l'effet visuel le brillant, le voile (Haze), la structure superficielle, les coordonnées trichromatiques, l'intensité de couleur et/ou la clarté.

12. Procédé selon l'une des revendications précédentes, **caractérisé en ce qu'**on utilise en tant que subjectile à peindre ayant une surface plane une tôle d'essai.

13. Procédé selon la revendication 12, **caractérisé en ce que** l'épaisseur, affectée aux différents points de mesure optique, de la ou des couches de peinture appliquées selon un gradient, est mesurée par une technique d'induction magnétique.

14. Procédé selon l'une des revendications précédentes, **caractérisé en ce qu'**il est mis en oeuvre pour caractériser la microstructure, le comportement au mouillage, l'étalement, la tendance à la coulure, le comportement en début de dissolution et/ou l'effet de peau d'orange de peintures ou de systèmes de peintures, par utilisation d'un appareil de mesure destiné à évaluer la structure de surface.

15. Procédé selon l'une des revendications 1 à 13, **caractérisé en ce qu'**il est mis en oeuvre pour caractériser le comportement en début de dissolution, la tendance à la coulure, le pouvoir couvrant, la tonalité chromatique, le changement d'adaptation chromatique, le changement de clarté, le trouble et/ou le pouvoir d'absorption du brouillard de pistolage de peintures ou de systèmes de peintures, par utilisation d'un appareil de mesure colorimétrique.

16. Procédé selon la revendication 15, **caractérisé en ce qu'**il est mis en oeuvre pour caractériser le comportement à la coulure de vernis de base à effet décoratif.

17. Procédé selon l'une des revendications précédentes, **caractérisé en ce qu'**il est mis en oeuvre dans le domaine du développement des liants et des peintures, pour contrôler la stabilité au stockage et/ou à une ligne en boucle, pour le contrôle de qualité et/ou pour développer ou surveiller l'application de la peinture et/ou les opérations de séchage ou de durcissement de la peinture.

18. Procédé selon l'une des revendications précédentes, **caractérisé en ce qu'**on applique plusieurs couches de différentes peintures.

19. Appareil pour mettre en oeuvre le procédé selon l'une des revendications précédentes, à l'aide duquel est déterminé l'effet visuel de systèmes de peintures appliqués sur des plaques d'essai (3), comportant une table de mesure (1) permettant de poser d'une manière interchangeable les plaques d'essai (3), un support (8, 9), pouvant se déplacer tant dans la direction longitudinale (axe Y) que dans la direction transversale (axe X) de la table de mesure (1), le support (8,9) portant un ou plusieurs appareils servant à l'évaluation optique ainsi qu'un appareil à la mesure de l'épaisseur de feuil des systèmes de peinture.

20. Appareil selon la revendication 19, **caractérisé en ce que** le support (8, 9) est logé de façon à pouvoir se déplacer pas à pas.

21. Appareil selon la revendication 18 ou 19, **caractérisé en ce que** le support (8, 9) est disposé sur un pont (5) logé d'une manière mobile sur la table de mesure (1).

22. Appareil selon la revendication 21, **caractérisé en ce que** le pont (5) est soutenu sur des rails courant dans la direction longitudinale (axe Y) de la table de mesure (1), et que le support (8, 9) comporte un chariot suspendu (8), pouvant se déplacer dans la direction transversale (axe X) de la table de mesure (1) contre l'arche (7) du pont (5).

23. Appareil selon la revendication 22, **caractérisé en ce que** des dispositifs de fixation (9) destinés aux appareils de mesure sont disposés contre le chariot (8), en pouvant se déplacer perpendiculairement à la table de mesure (1).

24. Appareil selon l'une des revendications 22 et 23, **caractérisé en ce que** le pont (5) et le chariot (8) sont pourvus d'un dispositif de commande, pour arrêter le pont (5) et/ou le chariot (8) en des points prédéfinis ou quelconques.
